# EUROPEAN PATENT SPECIFICATION

(11) **EP 4 138 557 B1**
(45) Date of publication and mention of the grant of the patent: **10.09.2025**
(21) Application number: 21734245.0
(22) Date of filing: 21.04.2021
(51) Int. Cl.: A01N 25/02, A01N 25/04, A01N 25/06, A01N 25/30, A01N 37/40, A01N 47/36, A01P 13/02, A01P 21/00

(54) **ADJUVANT FOR AGROCHEMICALS**
ADJUVANS FÜR AGROCHEMIKALIEN
ADJUVANT POUR PRODUITS AGROCHIMIQUES

(30) Priority: 23.04.2020 PL 43364920
(43) Date of publication of application: 01.03.2023
(73) Proprietor: AGROMIX sp. z o.o., 32-005 Niepolomice (PL)
(72) Inventor: WOZNICA, Zenon, 60-194 Poznan (PL); WOS, Kazimierz, 30-611 Krakow (PL); SZEWCZYK, Roman, 32-005 Niepolomice (PL)
(74) Representative: Czarnik, Maciej
(86) International application number: PCT/PL2021/050029
(87) International publication number: WO 2021/215947

(56) References cited:
- EP-A1- 0 598 515
- JP-A- 2005 350 360
- US-A1- 2017 295 782

## Description

The subject of the invention is a multifunctional adjuvant for agrochemicals, especially for plant protection agents, mainly herbicides, as well as biostimulants, growth regulators, fertilizers and other foliar-applied agrochemicals.

Adjuvants, called boosters, are added to the spray liquid of many foliar agrochemicals, especially herbicides, fungicides and insecticides, in order to increase the adhesion of the spray liquid droplets to the surface of the target pests, facilitate its wetting and the penetration and transport of active substances to the site of action. Other effects of adjuvants are also important, such as increasing the solubility of active substances in water, preventing rapid drying of the spray droplets and crystallization of active substances on the sprayed surface, as well as limiting wind drift of spray droplets and thus reducing environmental pollution. For this purpose, activating adjuvants based on surface active agents called surfactants, oils of mineral and vegetable origin, inorganic compounds, especially ammonium compounds, as well as utility adjuvants, the most important of which are compounds preventing foaming and drift of spray droplets by wind, are usually used. Due to the fact that these one-component adjuvants have a relatively narrow range of action, it is justified in agricultural practice to use adjuvant mixtures in which individual components have different functions and complement each other. Such multifunctional adjuvants are convenient for use by the user, allow for a strong increase in the effectiveness of plant protection products and maintain their performance at a high level in various natural and technical conditions, as well as enable the reduction of the doses of agrochemicals used, which brings measurable economic benefits and contributes to the reduction of contamination of agricultural products and the environment. Among others, US patents US5238604 A and US5624883 A are known for adjuvants that increase the effectiveness of plant protection products against weeds, diseases and pests. These adjuvants, apart from oil or fatty acid esters, contain a single non-ionic surfactant with lipophilic properties with a hydrophilic-lipophilic balance (HLB) value below 10, the main function of which, apart from reducing the surface tension, is to enable the preparation of a water-oil emulsion in a spray liquid. Adjuvants of this type have many significant disadvantages, in particular: (i) do not contain hydrophilic surfactants with HLB higher than 10, which optimize the retention of spray drops on the leaf surface and the penetration of active substances into plant cells; (*ii*) do not raise the pH of the spray liquid above 7, and therefore do not guarantee the maximum solubility of active substances in water (especially herbicides from the sulfonylurea group), so these substances remain in the spray liquid in a large amount in a crystalline form and only to a limited extent penetrate into plant cells.

According to prior art, there are also known adjuvants described in US and Polish patents intended for foliar herbicides, which contain fatty acid methyl esters, a surfactant and a compound increasing the pH of the spray liquid above 7, which facilitates the dissolution of many active substances, especially herbicides from the sulfonylurea group. For example, in patent US6642178 BB, this function is performed by triethanolamine (TEA) incorporated into the formulation, in the adjuvant presented in US6659720 BB, in addition to TEA, inorganic bases such as potassium or sodium hydroxide and primary amino alcohols can also act as a buffer to raise the pH of the spray liquid, while in in the adjuvant described in the patent PL201947 B1, the function of buffering and raising the pH of the spray liquid is performed by alkyldimethyl polyoxyethylene ammonium hydroxide. The patent US8765637 BB also describes the possibility of including in the composition of the oil adjuvant the alkalizing components represented by ethoxylated coconut amines and poorly environmentally friendly ethoxylated tallow amines. However, none of these adjuvants has a comprehensive effect on the most important factors limiting the action of plant protection products.

International patent application WO 2016/055344 A1 discloses a two-component adjuvant consisting of polyglycerol esters and emulsifiers in the form of e.g. ethoxylated amines. The adjuvant disclosed in this application did not contain an oil fraction that functions to dissolve cuticular waxes on the plant surface, which constitute an important barrier to the entry of pesticides into plant cells. Despite this significant drawback, this adjuvant has been used to increase the effectiveness of pesticides and to reduce wind drift of spray droplets during spraying.

The aim of the invention is to provide an adjuvant for foliar agrochemicals that is free from the disadvantages presented and eliminates more comprehensively the most important limiting factors. In the research conducted on such an adjuvant, a composition was sought with high biodegradability and guaranteeing a spraying liquid with high service life and ensuring high solubility of the active substances used, their high retention on the sprayed surface, also ensuring its adequate coverage and active penetration into the target pests.

The object of the invention is an adjuvant for foliar agrochemicals, in particular plant protection products, including herbicides, biostimulants, growth regulators or fertilizers, comprising:
an oil component which is a substance selected from the group of: vegetable oil, vegetable fatty acid methyl ester, vegetable fatty acid ethyl ester, vegetable fatty acid butyl ester or mixtures thereof,
and a wetting-alkalizing-compatibilizing component comprising:
   an alkaline non-ionic surfactant consisting of a mixture of ethoxylated alkyl amines with a C13-15 alkyl chain length and
   a non-ionic surfactant from the group of polyglycerol esters of vegetable fatty acids with a carbon chain length of C12-22.

Preferably, the adjuvant of the invention comprises: 70-90% by weight of oil component which is a substance selected from the group of: vegetable oil, vegetable fatty acid methyl ester, vegetable fatty acid ethyl ester, vegetable fatty acid butyl ester or mixtures thereof; 5-15% by weight of alkaline non-ionic surfactant consisting of a mixture of ethoxylated alkyl amines with a C13-15 alkyl chain length and 5-15% by weight a non-ionic surfactant from the group of polyglycerol esters of vegetable fatty acids with a carbon chain length of C12-22.

More preferably, the adjuvant of the invention comprises: 80% by weight of oil component which is a substance selected from the group of: vegetable oil, vegetable fatty acid methyl ester, vegetable fatty acid ethyl ester, vegetable fatty acid butyl ester or mixtures thereof; 10% by weight of alkaline non-ionic surfactant consisting of a mixture of ethoxylated alkyl amines with a C13-15 alkyl chain length and 10% by weight a non-ionic surfactant from the group of polyglycerol esters of vegetable fatty acids with a carbon chain length of C12-22.

Preferably, the oil of vegetable origin is rapeseed oil, soybean oil, sunflower oil, linseed oil.

According to another aspect, the invention also relates to a foliar spray composition comprising: a plant protection agent selected from the group of herbicides, biostimulants, growth regulators or fertilizers or mixtures thereof, an adjuvant according to the invention and water.

Preferably the herbicide in the foliar spray composition is a sulfonylurea herbicide.

The adjuvant according to the invention is a liquid homogeneous concentrate ensuring the formation of a stable oil-water emulsion in the spray liquid, buffering the spray liquid at a pH level above 7 and thus enabling easy dissolution of active substances, e.g. herbicides from the sulfonylurea group, ensuring adequate wetting of the sprayed surface and penetration of biological substances active to the cells of the target pests. Such an adjuvant, added to the spray liquid of agrochemicals, strongly increases the activity of the biologically active substances contained in them and allows to maintain their high effectiveness in a wide range of climatic and technical conditions, even when used in reduced doses, and also significantly reduces wind drift and thus reducing the possibility of damaging sensitive neighbourhood crops and polluting the environment with agrochemicals.

Unexpectedly, it turned out that the addition of an additional non-ionic surfactant from the group of polyglycerol esters of vegetable fatty acids with a carbon chain length of C12-22 to the composition of an adjuvant comprising crude vegetable oil (e.g. rapeseed, soybean, sunflower, linseed and / or other) and / or an ester methyl, ethyl or butyl fatty acids and an alkaline non-ionic surfactant consisting of a mixture of ethoxylated alkyl amines with a C13-15 alkyl chain length and HLB number of 15, made it possible to prepare a clear, homogeneous and storage-stable formulation, and this formulation allowed for the creation of a homogeneous, long-lasting formulation of oil-in-water emulsion spraying liquid. The addition of an additional surfactant from the group of polyglycerol esters of fatty acids to the adjuvant according to the invention made it possible to significantly improve its rheological and functional properties.

Ethoxylated alkyl amines of C13 [1], C14 [2] and C15 [3] alkyl chain length, contained in the non-ionic surfactant, which was included in the adjuvant according to the invention, have the following chemical structure:

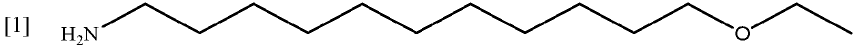

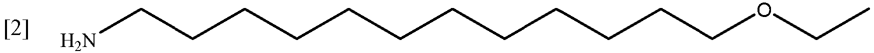

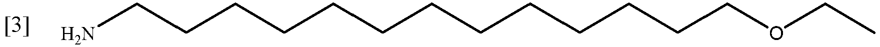

Surfactants from the group of polyglycerol esters of vegetable fatty acids, enabling the improvement of rheological and functional properties of the adjuvant according to the invention, have the following chemical structure: 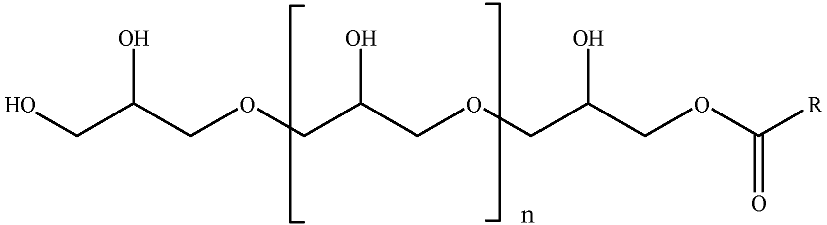 where n = 2-20 (number of glycerol molecules in the polymer), R = C12-22 fatty acid

The adjuvant according to the invention is biostatic and stable during storage for at least 12 months in the temperature range from -10 °C to + 54 °C. When added to the spray liquid at a concentration of 0.5-2%, it creates a stable oil-water emulsion that remains at the level acceptable for chemical plant protection for at least 12 hours. An important advantage of the adjuvant according to the invention is that it can be added to the spray liquid not only during its preparation, but also incorporated into liquid plant protection product formulations at the stage of their commercial production.

According to non-limiting embodiments of the patent application, the adjuvant composition according to the invention and the biological effects of using the adjuvant with a mixture of herbicides are presented:

### Example I

The container equipped with a mechanical stirrer contains: 700 parts by weight of rapeseed oil fatty acid methyl ester with a viscosity of 4 mm²/s at 20°C and a density of 0.85 g/cm³, 150 parts by weight of alkaline non-ionic surfactant consisting of a mixture of ethoxylated alkyl amines with a C13-15 alkyl chain length and HLB number 15, and 150 parts by weight of non-ionic surfactant from the group of polyglycerol esters of vegetable fatty acids with a carbon chain length of C12-22.

The whole was stirred slowly at the temperature of 20°C for about 10 minutes until the mixture is completely homogenized. A clear, homogeneous composition with a light amber colour was obtained, with a density of 0.91 g/cm³ and a kinematic viscosity of 4.1 mPa/s at 20°C, comprising 70% by weight of rapeseed oil fatty acid methyl ester, 15% by weight of alkaline non-ionic surfactant consisting of a mixture of ethoxylated alkyl amines with a C13-15 alkyl chain length and HLB number of 15 and 15% by weight of non-ionic surfactant from the group of polyglycerol esters of vegetable fatty acids with a carbon chain length of C12-22. The prepared adjuvant was introduced into water in a concentration of 1% and formed an oil-water emulsion stable with it for 12 hours with a pH of 8.28 and a static surface tension of 31.08 mNm.

### Example II

The container equipped with a mechanical stirrer comprises: 800 parts by weight of rapeseed oil fatty acid methyl ester with a viscosity of 4 mm²/s at 20°C and a density of 0.85 g/cm³, 100 parts by weight of alkaline non-ionic surfactant consisting of a mixture of ethoxylated alkyl amines with a C13-15 alkyl chain length and HLB number 15, and 100 parts by weight of non-ionic surfactant from the group of polyglycerol esters of vegetable fatty acids with a carbon chain length of C12-22.

The whole was stirred slowly at the temperature of 20°C for about 10 minutes until the mixture is completely homogenized. A clear, homogeneous composition with a light amber colour was obtained, with a density of 0.89 g/cm³ and a kinematic viscosity of 3.4 mPa/s at 20°C, comprising 80% by weight of rapeseed oil fatty acid methyl ester, 10% by weight of alkaline non-ionic surfactant consisting of a mixture of ethoxylated alkyl amines with a C13-15 alkyl chain length and HLB number of 15 and 10% by weight of non-ionic surfactant from the group of polyglycerol esters of vegetable fatty acids with a carbon chain length of C12-22. The prepared adjuvant was introduced into water in a concentration of 1% and formed an oil-water emulsion stable with it for 12 hours with a pH of 8.12 and a static surface tension of 31.87 mNm.

### Example III

The container equipped with a mechanical stirrer comprises: 900 parts by weight of rapeseed oil fatty acid methyl ester with a viscosity of 4 mm²/s at 20°C and a density of 0.85 g/cm³, 50 parts by weight of alkaline non-ionic surfactant consisting of a mixture of ethoxylated alkyl amines with a C13-15 alkyl chain length and HLB number 15, and 50 parts by weight of non-ionic surfactant from the group of polyglycerol esters of vegetable fatty acids with a carbon chain length of C12-22.

The whole was stirred slowly at the temperature of 20°C for about 10 minutes until the mixture is completely homogenized. A clear, homogeneous composition with a light amber colour was obtained, with a density of 0.87 g/cm³ and a kinematic viscosity of 3.3 mPa/s at 20°C, comprising 90% by weight of rapeseed oil fatty acid methyl ester, 5% by weight of alkaline non-ionic surfactant consisting of a mixture of ethoxylated alkyl amines with a C13-15 chain length and HLB number of 15 and 5% by weight of non-ionic surfactant from the group of polyglycerol esters of vegetable fatty acids with a carbon chain length of C12-22. The prepared adjuvant was introduced into water in a concentration of 1% and formed an oil-water emulsion stable with it for 12 hours with a pH of 7.54 and a static surface tension of 33.07 mNm.

### Example IV

The influence of the non-ionic surfactant from the group of polyglycerol esters in the adjuvant composition on the quality of the oil-water emulsion was investigated and surprisingly it turned out that the mixture of this surfactant with methyl ester of rapeseed oil in water retains a very good quality even up to 12 hours after its preparation.

*** 1 - very poor (complete separation); 5 - very good (homogeneity throughout the volume)**

| Adjuvant composition | Concentration in water (% by volume) | Oil-in-water emulsion quality (hrs after preparation) | | | |
|---|---|---|---|---|---|
| | | 0.12 | 1 | 6 | 12 |
| Two-component composition comprising: 800 parts by weight of rapeseed oil fatty acid methyl ester (properties as in examples I - III) and 200 parts by weight of an alkaline non-ionic surfactant from the group of ethoxylated amines with a C13-15 alkyl chain length and HLB number of 15 | 0.5 | 4.5 | 3.0 | 2.0 | 1.0 |
| | 1.0 | 5.0 | 3.5 | 2.0 | 1.5 |
| | 2.0 | 5.0 | 3.5 | 2.5 | 1.5 |
| Three-component composition acc. to example I with non-ionic surfactant from polyglycerol esters group | 0.5 | 5.0 | 5.0 | 5.0 | 5.0 |
| | 1.0 | 5.0 | 5.0 | 5.0 | 5.0 |
| | 2.0 | 5.0 | 5.0 | 5.0 | 5.0 |
| Three-component composition acc. to Example II (with non-ionic surfactant from polyglycerol esters group) | 0.5 | 5.0 | 5.0 | 4.5 | 4.0 |
| | 1.0 | 5.0 | 5.0 | 5.0 | 4.5 |
| | 2.0 | 5.0 | 5.0 | 5.0 | 5.0 |
| Three-component composition acc. to example III with non-ionic surfactant from polyglycerol esters group | 0.5 | 5.0 | 5.0 | 4.0 | 4.0 |
| | 1.0 | 5.0 | 5.0 | 4.5 | 4.0 |
| | 2.0 | 5.0 | 5.0 | 5.0 | 4.5 |

The data presented in the table above shows that oil-in-water emulsions comprising an adjuvant with a surfactant from the group of polyglycerol esters (three-component compositions according to examples I - III) are more stable than an oil-in-water emulsion composition comprising only an alkaline non-ionic surfactant from the group of ethoxylated amines as an adjuvant with a C13-15 alkyl chain length and HLB number of 15.

### Example V

The influence of the adjuvant composition prepared according to Example II on the herbicidal effectiveness of the herbicide Hector Max 66.5 WG (a.i. dicamba + nicosulfuron + rimsulfuron) used in the recommended and reduced dose in maize was also carried out (field studies, average for 2018 and 2019, Educational and Experimental Station Gorzyń, Brody Branch, Poznań University of Life Sciences).

| Object | Dose per 1 ha | Lambsquarters *(Chenopodium album)* | Barnyard grass *(Echinochloa crus-galli)* | Weeds in total * ** |
|---|---|---|---|---|
| | | reduction of fresh weight of weeds 4 weeks after treatment (in %) | | |
| Control (fresh weed weight) | | 0 (1406 g/m²) | 0 (162 g/m²) | 0 (1653 g/m²) |
| Hector Max 66.5 WG | 350 g | 77 | 76 | 73 |
| Hector Max 66.5 WG | 250 g | 62 | 52 | 54 |
| Hector Max 66.5 WG + composition acc. to example II | 250 g + 1.5 L | 98 | 92 | 98 |
| Hector Max 66.5 WG + Atpolan BIO 80 EC* | 250 g + 1.5 L | 94 | 90 | 96 |
| Hector Max 66.5 WG + Trend 90 EC** | 1.5 +0.1% | 88 | 77 | 88 |
| * comparative adjuvant 1 (fatty acid methyl ester, mixture of cation-nonionic surfactants in the form of a two-component emulsifying-wetting agent being a mixture of ethoxylated alcohol with HLB number from 10-15 and cationic surfactant - alkyl dimethyl polyoxyethylene ammonium hydroxide with an average molecular weight of 350) from Z.P.H.Agromix | | | | |
| ** comparative adjuvant 2 (ethoxylated isodecyl alcohol) from duPont. | | | | |
| ***weeds in total: lambsquarters (*Chenopodium album*), climbing buck-wheat (*Fallopia convolvulus*), small flowered crane's-bill (*Geranium pusillum*), goosegrass (*Galium aparine*) and barnyard grass (*Echinochloa crus-galli*) | | | | |

The data presented in the table above shows that by using the adjuvant composition prepared according to example II of the invention at a dose of 1.5 L/ha with a reduced dose of the herbicide Hector Max 66.5 WG (a.i dicamba + nicosulfuron + rimsulfuron) in maize, a higher herbicidal effectiveness was achieved after the application of this herbicide in the full dose without adjuvant. The adjuvant efficacy of example II of the invention was clearly superior to that of the comparative Trend 90 EC adjuvant.

## Claims

1. An adjuvant for agrochemicals, in particular plant protection products, comprising:
an oil component which is a substance selected from the group of: vegetable oil, vegetable fatty acid methyl ester, vegetable fatty acid ethyl ester, vegetable fatty acid butyl ester or mixtures thereof, and
a wetting-alkalizing-compatibilizing component comprising:
an alkaline non-ionic surfactant consisting of a mixture of ethoxylated alkyl amines with a C13-15 alkyl chain length, and
a non-ionic surfactant from the group of polyglycerol esters of vegetable fatty acids with a carbon chain length of C12-22.

2. The adjuvant according to claim **1,** wherein it comprises: 70-90% by weight of oil component which is a substance selected from the group of: vegetable oil, vegetable fatty acid methyl ester, vegetable fatty acid ethyl ester, vegetable fatty acid butyl ester or mixtures thereof; 5-15% by weight of alkaline non-ionic surfactant consisting of a mixture of ethoxylated alkyl amines with a C13-15 alkyl chain length and 5-15% by weight a non-ionic surfactant from the group of polyglycerol esters of vegetable fatty acids with a carbon chain length of C12-22.

3. The adjuvant according to claim 2, wherein it comprises 80% by weight of oil component which is a substance selected from the group of: vegetable oil, vegetable fatty acid methyl ester, vegetable fatty acid ethyl ester, vegetable fatty acid butyl ester or mixtures thereof; 10% by weight of alkaline non-ionic surfactant consisting of a mixture of ethoxylated alkyl amines with a C13-15 alkyl chain length and 10% by weight a non-ionic surfactant from the group of polyglycerol esters of vegetable fatty acids with a carbon chain length of C12-22.

4. The adjuvant according to claim 1, wherein the oil of vegetable origin is rapeseed oil, soybean oil, sunflower oil, linseed oil.

5. A foliar spray composition comprising:
a plant protection product selected from the group of: herbicides, biostimulants, growth regulators or fertilizers or their mixtures,
water, and
the adjuvant as defined in any one of the preceding claims from 1 to 4.

6. The foliar spray composition according to claim 5, wherein the herbicide is a sulfonylurea herbicide.

## Patentansprüche

1. Ein Hilfsstoff für Agrochemikalien, insbesondere Pflanzenschutzmittel, umfassend:
eine Ölkomponente, die eine Substanz ist, ausgewählt aus der Gruppe bestehend aus: Pflanzenöl, pflanzlichem Fettsäuremethylester, pflanzlichem Fettsäureethylester, pflanzlichem Fettsäurebutylester oder Mischungen davon, und
eine benetzende, alkalisierende, kompatibilisierende Komponente, umfassend:
einem alkalischen nichtionischen Tensid, bestehend aus einer Mischung von ethoxylierten Alkylaminen mit einer C13-15-Alkylkettenlänge, und
ein nichtionisches Tensid aus der Gruppe der Polyglycerinester pflanzlicher Fettsäuren mit einer Kohlenstoffkettenlänge von C12-22.

2. Das Hilfsmittel gemäß Anspruch 1, wobei es umfasst: 70-90 Gew.-% Ölkomponente, die eine Substanz ist, ausgewählt aus der Gruppe: Pflanzenöl, pflanzlicher Fettsäuremethylester, pflanzlicher Fettsäureethylester, pflanzlicher Fettsäurebutylester oder Mischungen davon; 5 bis 15 Gew.-% alkalisches nichtionisches Tensid, bestehend aus einer Mischung von ethoxylierten Alkylaminen mit einer Alkylkettenlänge von C13-15, und 5 bis 15 Gew.-% nichtionisches Tensid aus der Gruppe der Polyglycerinester pflanzlicher Fettsäuren mit einer Kohlenstoffkettenlänge von C12-22.

3. Das Hilfsmittel gemäß Anspruch 2, wobei es 80 Gew.-% einer Ölkomponente umfasst, die eine Substanz ist, die aus der Gruppe ausgewählt ist, bestehend aus: pflanzlichem Öl, pflanzlichem Fettsäuremethylester, pflanzlichem Fettsäureethylester, pflanzlichem Fettsäurebutylester oder Mischungen davon; 10 Gew.-% alkalischem nichtionischem Tensid, bestehend aus einer Mischung von ethoxylierten Alkylaminen mit einer C13-15-Alkylkettenlänge, und 10 Gew.-% eines nichtionischen Tensids aus der Gruppe der Polyglycerinester pflanzlicher Fettsäuren mit einer Kohlenstoffkettenlänge von C12-22.

4. Das Hilfsmittel gemäß Anspruch 1, wobei das Öl pflanzlichen Ursprungs Rapsöl, Sojaöl, Sonnenblumenöl oder Leinöl ist.

5. Eine Blattsprühzusammensetzung, umfassend:
ein Pflanzenschutzmittel, ausgewählt aus der Gruppe: Herbizide, Biostimulanzien, Wachstumsregulatoren oder Düngemittel oder deren Mischungen,
Wasser und
dem Hilfsstoff, wie in einem der vorstehenden Ansprüche 1 bis 4 definiert.

6. Die Blattsprühzusammensetzung gemäß Anspruch 5, wobei das Herbizid ein Sulfonylharnstoff-Herbizid ist.

## Revendications

1. Adjuvant pour produits agrochimiques, en particulier pour produits phytosanitaires, comprenant:
un composant huileux qui est une substance choisie dans le groupe constitué par : une huile végétale, un ester méthylique d'acide gras végétal, un ester éthylique d'acide gras végétal, un ester butylique d'acide gras végétal ou des mélanges de ceux-ci, et
un composant mouillant-alcalinisant-compatibilisant comprenant :
un tensioactif non ionique alcalin constitué d'un mélange d'alkylamines éthoxylées ayant une longueur de chaîne alkyle en C13-15, et
un tensioactif non ionique du groupe des esters de polyglycérol d'acides gras végétaux ayant une chaîne carbonée de longueur C12-22.

2. L'adjuvant selon la revendication 1, dans lequel il comprend : 70 à 90 % en poids de composant huileux qui est une substance choisie dans le groupe constitué par : une huile végétale, un ester méthylique d'acide gras végétal, un ester éthylique d'acide gras végétal, ester butylique d'acide gras végétal ou leurs mélanges ; 5 à 15 % en poids d'un tensioactif non ionique alcalin constitué d'un mélange d'alkylamines éthoxylées ayant une longueur de chaîne alkyle de C13 à C15 et 5 à 15 % en poids d'un tensioactif non ionique choisi dans le groupe des esters de polyglycérol d'acides gras végétaux ayant une longueur de chaîne carbonée de C12 à C22.

3. L'adjuvant selon la revendication 2, dans lequel il comprend 80 % en poids d'un composant huileux qui est une substance choisie dans le groupe constitué par : une huile végétale, un ester méthylique d'acide gras végétal, un ester éthylique d'acide gras végétal, un ester butylique d'acide gras végétal ou des mélanges de ceux-ci ; 10 % en poids d'un tensioactif non ionique alcalin constitué d'un mélange d'alkylamines éthoxylées ayant une longueur de chaîne alkyle de C13 à C15 et 10 % en poids d'un tensioactif non ionique choisi dans le groupe des esters de polyglycérol d'acides gras végétaux ayant une longueur de chaîne carbonée de C12 à C22.

4. L'adjuvant selon la revendication 1, dans lequel l'huile d'origine végétale est de l'huile de colza, de l'huile de soja, de l'huile de tournesol ou de l'huile de lin.

5. Composition pour pulvérisation foliaire comprenant :
un produit phytosanitaire choisi dans le groupe constitué par : les herbicides, les biostimulants, les régulateurs de croissance ou les engrais ou leurs mélanges,
de l'eau, et
l'adjuvant tel que défini dans l'une quelconque des revendications précédentes de 1 à 4.

6. Composition de pulvérisation foliaire selon la revendication 5, dans laquelle l'herbicide est un herbicide à base de sulfonylurée.
